# EUROPEAN PATENT APPLICATION

(11) **EP 1 143 362 A2**
(43) Date of publication of application: **10.10.2001**
(21) Application number: 00204438.6
(22) Date of filing: 12.12.2000
(51) Int. Cl.: G06F 17/60, G06F 17/30

(54) **System and method for managing financial transaction information**

(30) Priority: 14.12.1999 US 170658 P
(71) Applicant: Citicorp Development Center, Inc., Los Angeles, California 90066 (US)
(72) Inventor: Carothers, Kevin, North Hills, CA 91343 (US); Kihlkevich, Simon, Northridge, CA 91326 (US); Plakos, Bonnie, Santa Clara, CA 91321 (US); Barkus, Arunas, Santa Monica, CA 90403 (US)
(74) Representative: Hynell, Magnus

(57) **Abstract**

A method and system for producing advanced management information system information includes, for example, reading one or more transaction journal logs stored in a database for one or more financial institution applications, such as an account information application, a bill payment application, a transfer application, a customer service channel report application, and/or a standards compliance application, written in a pre-defined binary format to isolate a transaction message in a message buffer. The message contents are parsed out and written out into a flat-text file of Structured Query Language (SQL) records into an output file loadable into a database re-using at least one Visual Basic (VB) class used for creating the transaction journal log. The output file is stored, for example, in a relational database management system and can be used to produce various types of reports, including a number of standard reports.

## Description

### Field of the Invention

The present invention relates generally to the field of management information systems and more particularly to a system and method for managing information concerning financial transactions, such as home banking system transactions and automatic teller machine (ATM) transactions.

### Priority Application

This application claims the benefit of US Provisional Application No. 60/170,658 filed December 14, 1999, and entitled "Management Information System And Method For A Home Banking System (CITIDIRECT MIS)," incorporated herein by this reference.

### Background of the Invention

Typically, the home banking system of a financial institution, such as a bank, has hundreds of different kinds of messages or different kinds of services that the bank can offer, for example, within its home banking system or through its ATM network. It would be beneficial for the bank to have an extensible Management Information System (MIS) that allows the bank to append and add and modify much easier than the tools that are currently available. There are some tools for extracting, for example, common forms of input formats, such as Excel, Access, and the like, but the problem is that the bank must take its existing log files and put them in yet another format and then proceed from that point with developing meaningful MIS information.

### Summary of the Invention

It is a feature and advantage of the present invention to provide a system and method for managing information concerning financial transactions that takes existing messages and the existing software for home banking and develops messages which go into an MIS database and easily and efficiently provides many different types of reports.

It is another feature and advantage of the present invention to provide a system and method for managing information concerning financial transactions that produces reports of the total number of valid and invalid financial and non-financial transactions that have occurred for a given period, and a total summary for those transactions, as well as the total valid and invalid sessions for home banking that were using, for example, either the Netscape browser or Internet Explorer browser, all in a single report.

It is an additional feature and advantage of the present invention to provide a system and method for managing information concerning financial transactions that produces reports, for example, of when a customer logged on the home banking system and what the customer did and how often the customer did or did not log on.

It is a further feature and advantage of the present invention to provide a system and method for managing information concerning financial transactions that produces reports, for example, of function usage and that enables grouping of certain functions by their category.

To achieve the stated and other features, advantages and objects, an embodiment of the present invention provides a system and method for managing information concerning financial transactions, such as home banking system transactions and ATM transactions, which reuses, for example, the programming environment classes that created the log messages for the purpose of re-creating the contents of the message from the log file to easily and conveniently produce a variety of customer activity reports.

For example, in an embodiment of the present invention, source data, such as ATM source transaction data and/or home banking system source transaction data, written sequentially in a pre-defined binary format, such as binary elementized message format, is captured from a source data database storing the data and parsed to a plain text file format. A unique integer key value is assigned to each individual transaction record in each plain text output file, and the output files are loaded to a relational database management system. The captured source data is in the form, for example, of decrypted ATM and/or home banking system transaction journal logs from an ATM system server or home banking system server stored in the source data database.

In an aspect of the present invention, individual transaction records are parsed to ASCII text file format, all fields are converted to ASCII text file format, columnized text is produced, and dates and times of individual transaction records are formatted into recognizable Structured Query Language (SQL) formatted values. In addition, each transaction entry is examined to determine a type of function for the transaction, each transaction encountered in the examination is written as a line to an output file, and all transactions encountered are grouped by transaction according to a data column of the transaction journal record that refers back to a session log record. The unique integer key value is assigned to each individual transaction record in the ASCII text output files and written to a pre-defined column in each output file for loading to the relational database system. In addition, transaction times are computed for each of the individual transaction records and added to the corresponding output file.

In another aspect of an embodiment of the present invention, one or more transaction journal logs for one or more financial institution applications, such as an account information application, a bill payment application, a transfer application, a customer service channel report application, and/or a standards compliance application, written in a pre-defined binary format are read to isolate a transaction message in a message buffer. The message contents are parsed out and written out into a flat-text file of SQL records into an output file loadable into a database re-using at least one Visual Basic (VB) class used for creating the transaction journal log, and the output file is stored in the database. The transaction journal logs or input files are written, for example, in a binary elementized message format.

In this aspect, the transaction message buffer is isolated and a function code of the message is determined. One or more VB classes that created the transaction message are reused to re-create the contents of the transaction message, which was written in VB and via the VB class to produce the transaction journal log, from the transaction journal log The transaction journal log is read by a VB application having a command line for a user interface for invocation which is started with the name of an input file given on the command line. The VB application includes, via a VB object manager, all known message type class-files that the VB application processes, and the transaction journal log is read by a VB object linking and embedding (OLE) control component of the VB application, known as TJPARSE.OCX. A VB form that also displays status and offers a GUI to the VB application is defined as a container for one or more VB OLE control components, referred to as TJPARSE.OCX and MSGOCX.OCX.

The VB application calls a method, known as TJPARSE.OCX, to find a next transaction message in the transaction journal log, and a status is returned to the VB application indicating if an end-of-file was reached and/or if a garbled message was encountered. The transaction message is isolated into the buffer space, the VB application calls another property of the called method to acquire an address of the message buffer space, and the buffer space address is acquired in the form of a VB Variant data type. The called method invokes an initialization Application Program Interface (API) to open the transaction journal log file and perform an internal initialization, to close any previously opened file, and to open and initialize a new transaction journal log file.

Additionally, the called method invokes an isolating the next transaction journal message API to position the next transaction message in the transaction journal log, read the transaction message contents, and insert the transaction message in a static buffer. A status is returned to the VB application indicating, for example, a function code for the transaction message, if an end-of-file in the transaction journal log was reached, and/or if a garbled section of the transaction journal log was encountered. If the end-of-file status is returned, the VB application can decide to quit or move on to another transaction message; if the garbled section of the transaction journal log status is returned, the VB application can decide to quit or continue to a next recognizable section of the transaction journal log; and if the function code status is returned, the VB application is provided with the function code for the message which can be used to determine a VB class to populate. Further, the called method invokes a returning a transaction message buffer address API for returning the transaction message buffer memory address used by a message processing method.

The contents of the isolated transaction message are parsed into individual elementized message format variables by the VB application message processing component referred to as MSGOCX.OCX, consisting at least in part of a VB class file, which parses the elementized message formatted binary transaction message buffer into VB variables. The isolated transaction message buffer is parsed by an API method, via an application-supplied transaction message buffer address, into variables within a VB class file via an API to an internal subroutine, which is made public via an OLE property. The parsed elementized message format contents are then written out into the flat text file of SQL records. In this regard, an open elementized message format output file is invoked to open the output file. In addition, a writing the elementized message format output file is invoked to write out the parsed elementized message format contents on a pre-defined date range to the output file. Thereafter, a closing the elementized message format output file is invoked to close the elementized message format output file. and another elementized message format output file can be opened.

In this aspect, writing out the parsed message contents also involves, for example, finding a next transaction message in the transaction log, closing all input and output files and/or extracting a predefined date-range of ransaction log files out of the transaction journal log based on a predetermined beginning and ending date. The predefined date-range of transaction log files is extracted, for example, by examining a VB date variable in a related VB class and writing out the pre-defined date-range of transaction log files to the output file. Finally, an audit check can be performed on the SQL records.

The output files, which are stored in the database, can be used for providing report types, such as an overall summary session type of report, a statistics summary type of report, a functional usage summary type of report, a payment/transfer activity summary type of report, and/or a functional activity type of report. The stored output files can also be used to provide standard reports, such as a session summary report, a usage comparison report, a functions summary report, a customer activation /usage report, a session completion details report, an error reports, and/or a functions detail report.

In a further aspect of an embodiment of the present invention, a method is called to find a next message in the transaction journal log files, an end of a transaction journal log file is found, the message contents are isolated into a message buffer space, and a status indicating that the end of the file was reached is returned. Another property of the method is called to acquire an address of the message buffer space, which is provided in the form of a VB VARIANT data type. The contents of the message corresponding to the message buffer address are parsed into elementized message format variables within at least one VB class. An SQL record of the parsed message contents is written into an output file, and/or VB date variables in a predetermined VB class are examined to determine if the parsed message contents should be written to an elementized message format output file. The output file is stored in a relational database management system.

Additional objects, advantages and novel features of the invention will be set forth in part in the description which follows, and in part will become more apparent to those skilled in the art upon examination of the following, or may be learned by practice of the invention.

### Brief Description of the Drawings

Fig. 1 is a schematic diagram which shows an example overview of key components and the flow of information between key components for the advanced MIS system for an embodiment of the present invention;
Fig. 2 is a schematic flow chart which illustrates an example of the flow of information between key components of the advanced MIS system for an embodiment of the present invention;
Fig. 3 is a table which illustrates examples of the types of reports provided by the advanced MIS system for an embodiment of the present invention;
Fig. 4 is a sample Graphical User Interface (GUI) screen which illustrates an example of a typical query that may be run on the data warehouse for an embodiment of the present invention;
Fig. 5 is a schematic flow diagram which further illustrates and amplifies examples of key components and the flow of information between key components for the advanced MIS system for an embodiment of the present invention;
Fig. 6 is a schematic diagram which illustrates an example of key components and the flow of information between key components for the DAPARSER program for an embodiment of the present invention;
Fig. 7 shows a sample GUI screen for the interactive version for an embodiment of the present invention
Fig. 8 is a flow chart which illustrates an example of the process of producing SQL output records from TJ logs and/or extracting MIS log file records for an embodiment of the present invention;
Fig. 9 is a table which shows examples of APIs provided by the TJPARSE.OCX OLE control for an embodiment of the present invention;

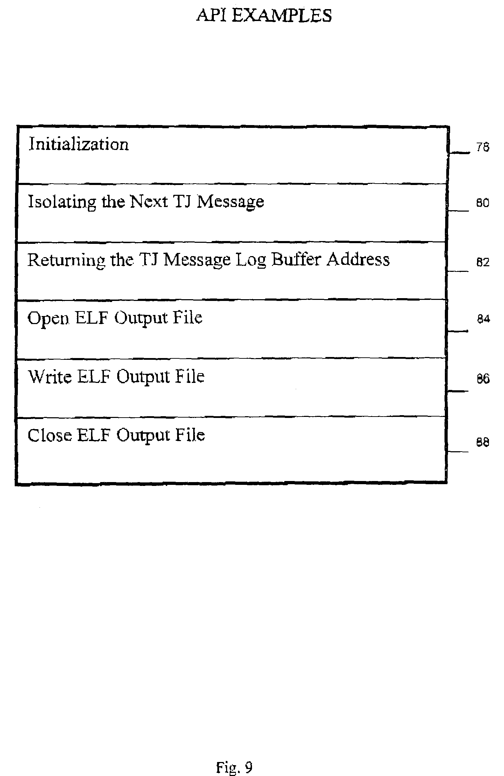

Fig. 9 is a table which shows examples of applications, the log files of which the DAPARSER program for an embodiment of the present invention is capable of parsing;

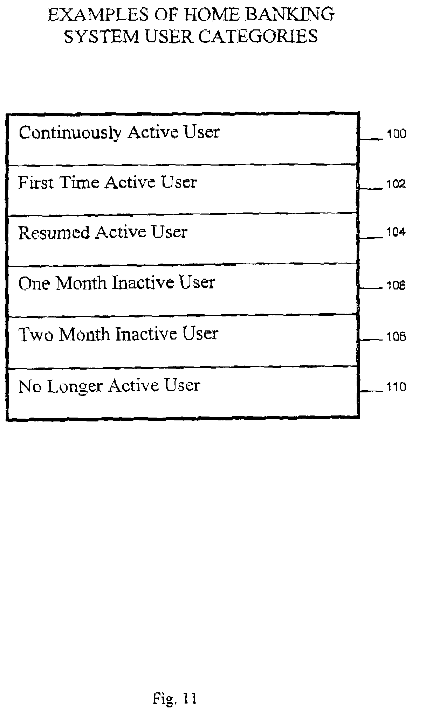

Fig. 11 is a table which shows examples of categories of users according to usage of a home banking system

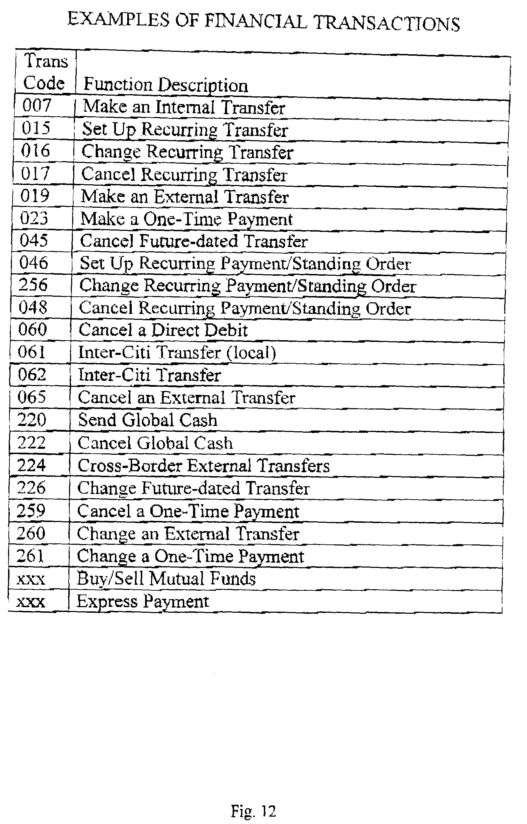

Fig. 12 is a table which illustrates examples of functions that are considered to be financial transactions for an embodiment of the present invention;

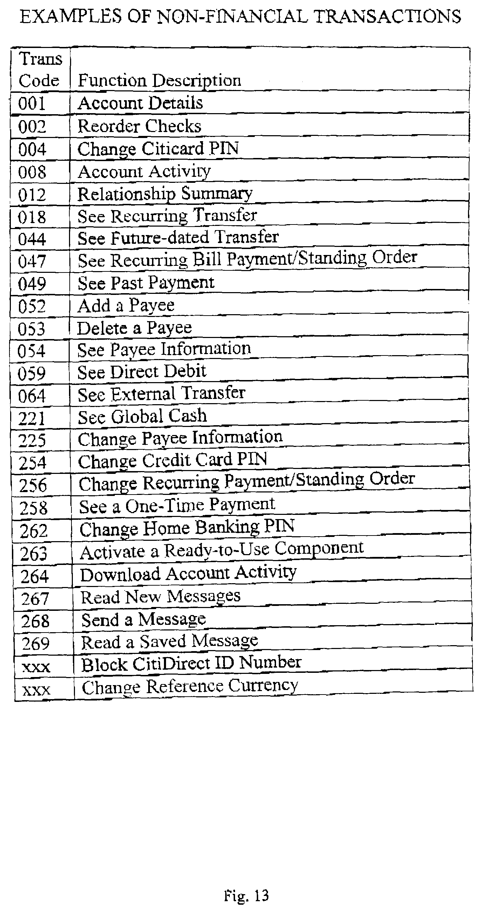

Fig. 13 is a table which illustrates examples of functions that are considered to be non-financial transactions for an embodiment of the present invention;

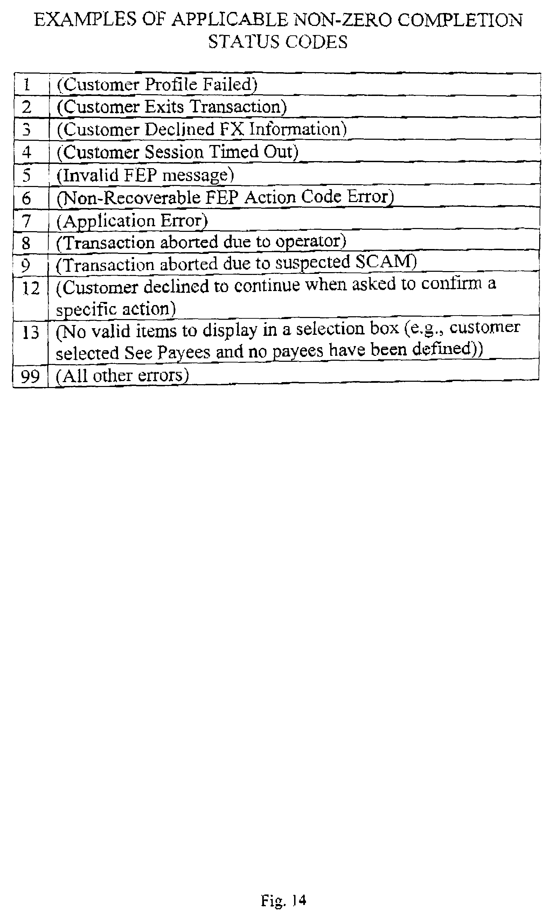

Fig. 14 is a table which illustrates examples of applicable non-zero completion status codes for an embodiment of the present invention;

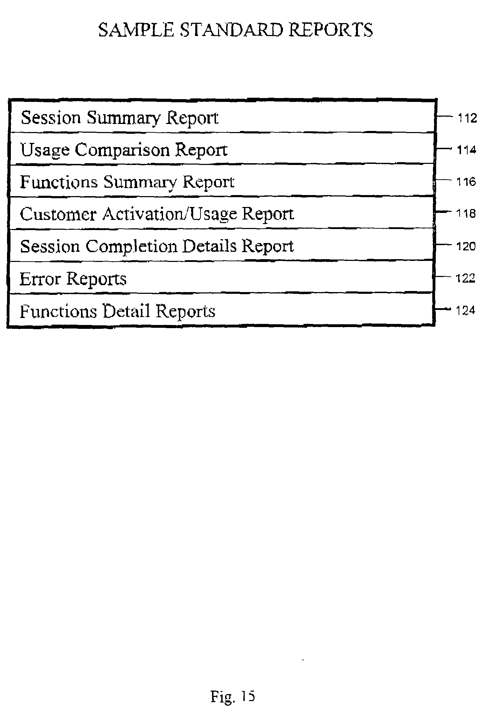

Fig. 15 is a table which shows a list of examples of standard reports for an embodiment of the present invention

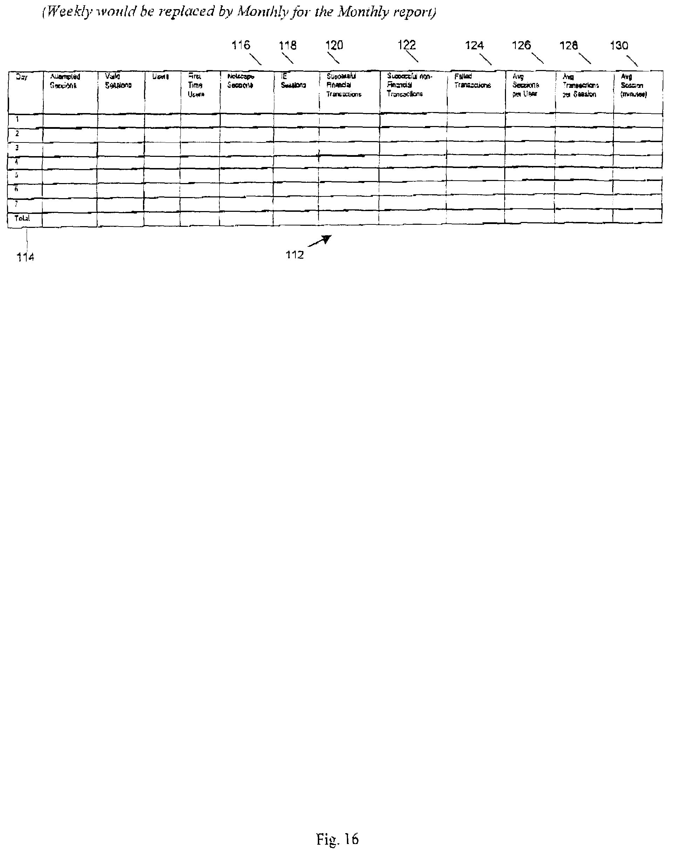

Fig. 16 shows a sample layout of a weekly session summary report for an embodiment of the present invention;

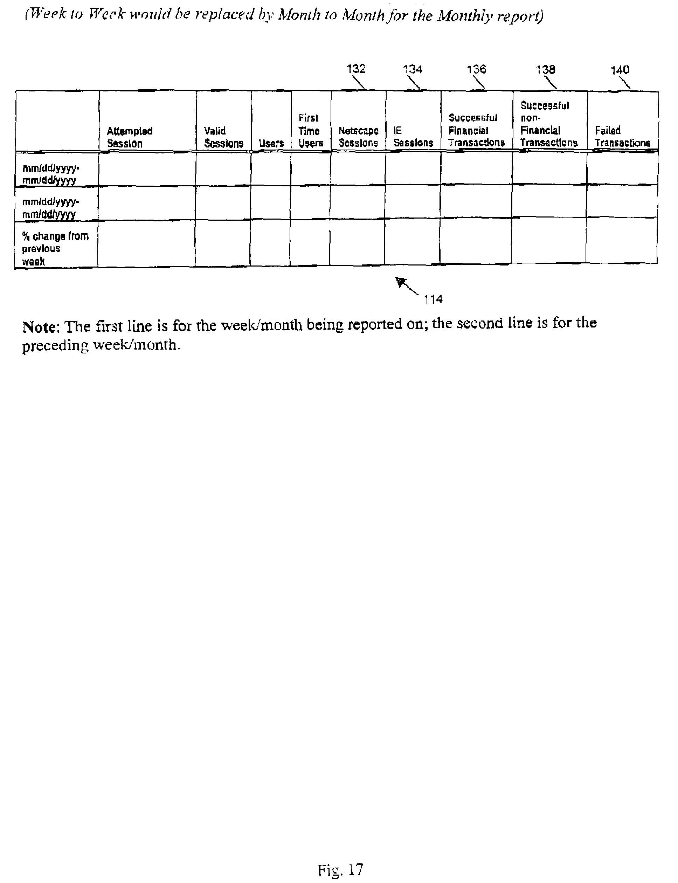

Fig. 17 shows a sample layout for a usage comparison report for an embodiment of the present invention

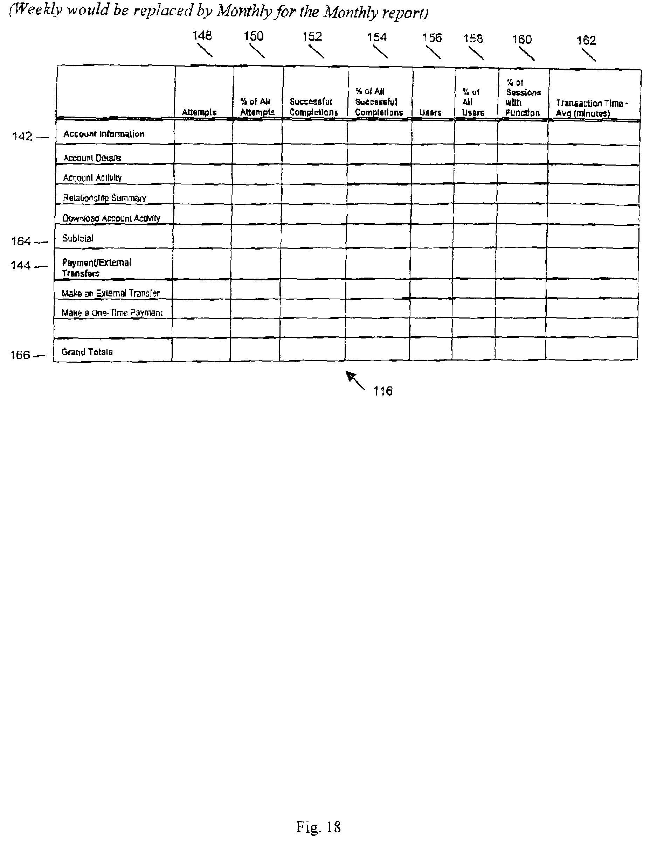

Fig. 18 illustrates an example of a functional summary report for an embodiment of the present invention;

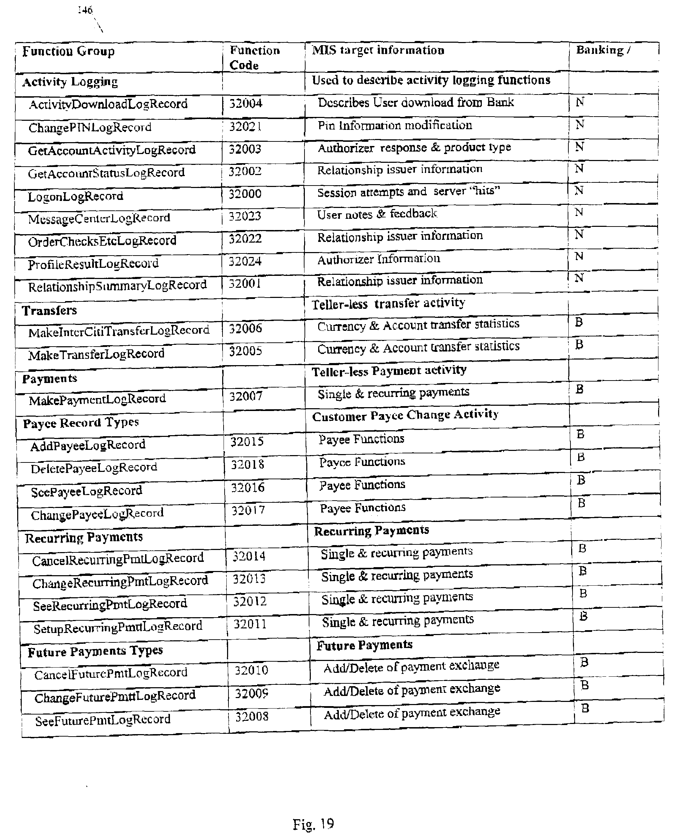

Fig. 19 shows examples of functions within the function groups for an embodiment of the present invention;

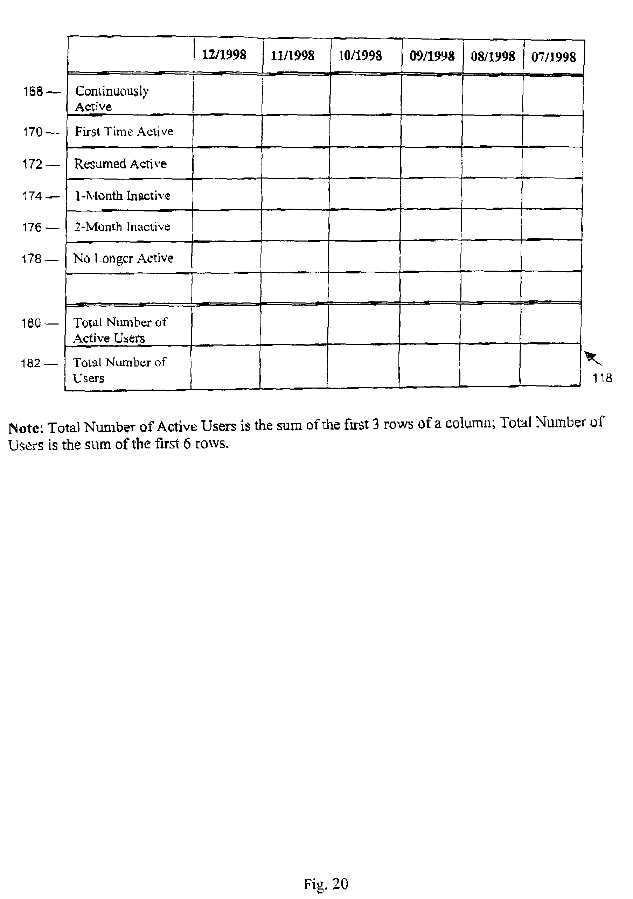

Fig. 20 illustrates an example layout of a customer activation usage report for an embodiment of the present invention;

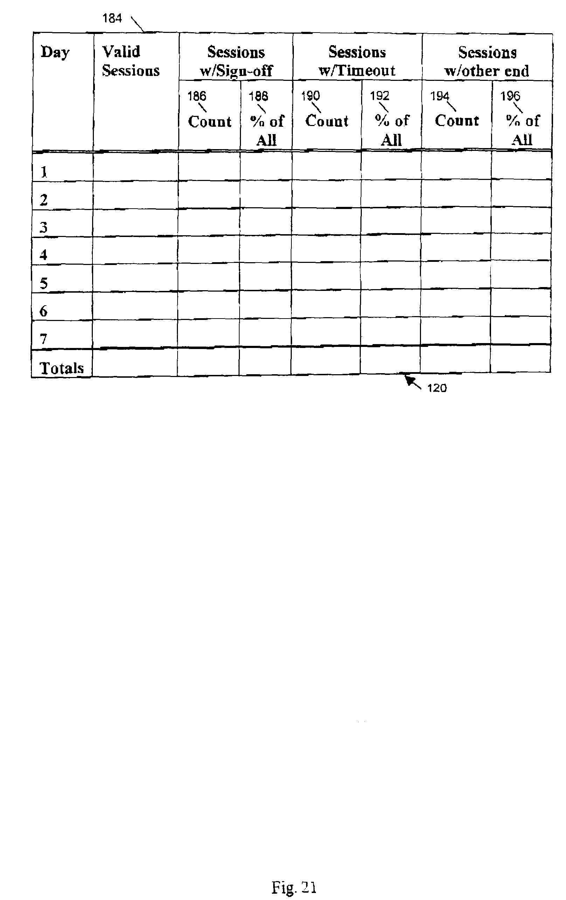

Fig. 21 shows an example of a session-completion report for an embodiment of the present invention;

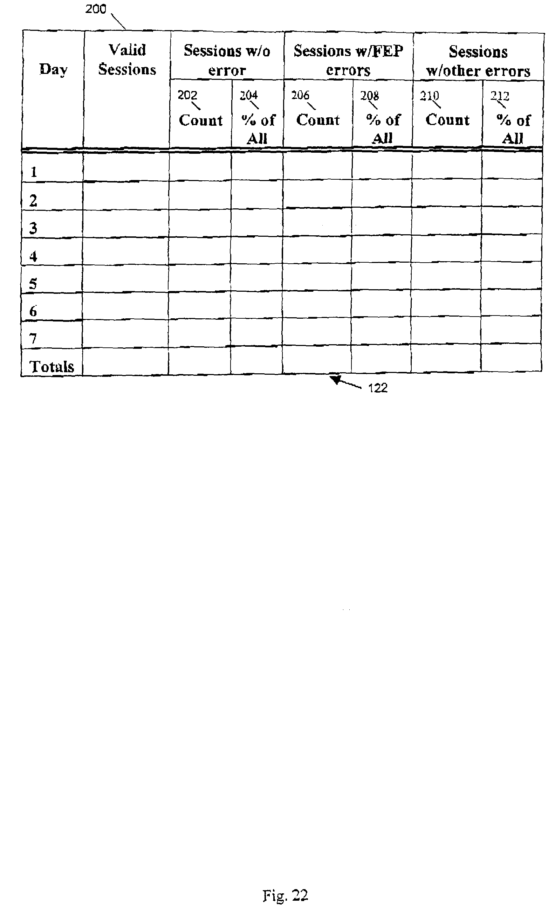

Fig. 22 shows a sample layout of a session-error report for an embodiment of the present invention;

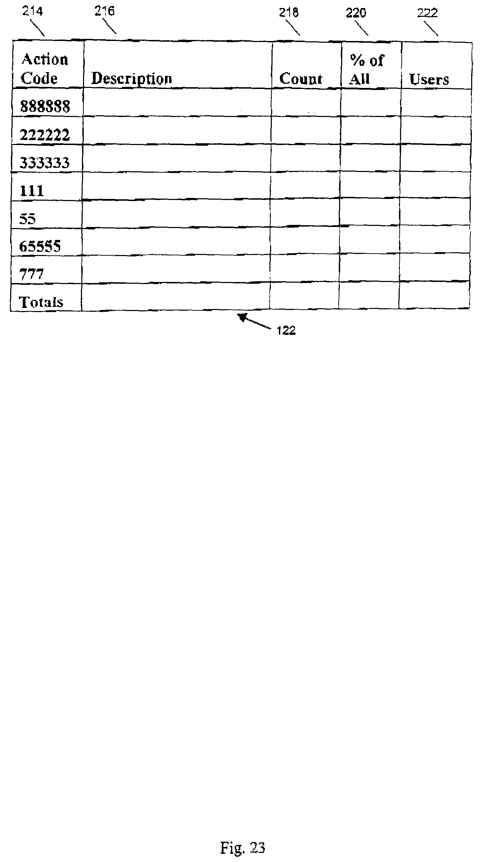

Fig. 23 shows a sample layout of an error ranking report for an embodiment of the present invention;

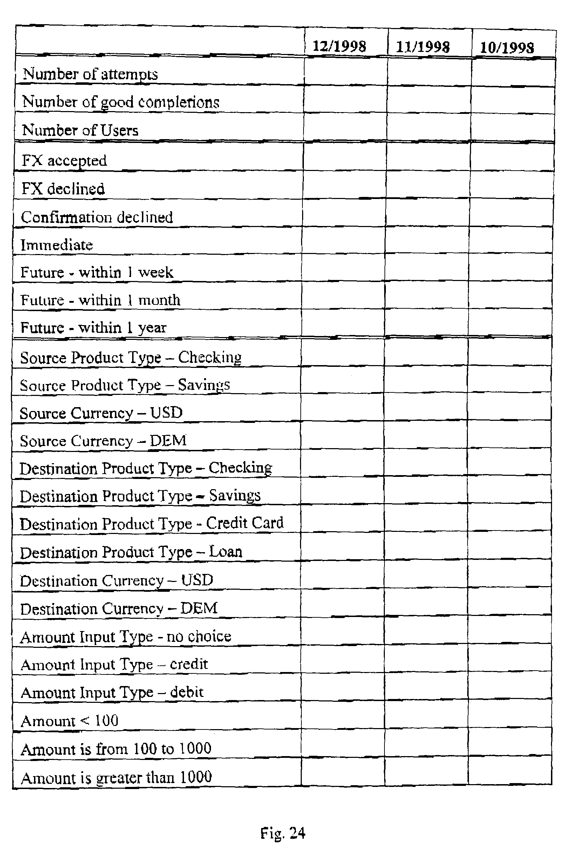

Fig. 24 illustrates an example of a sample layout of a function details reports-transfers for an embodiment of the present invention; and

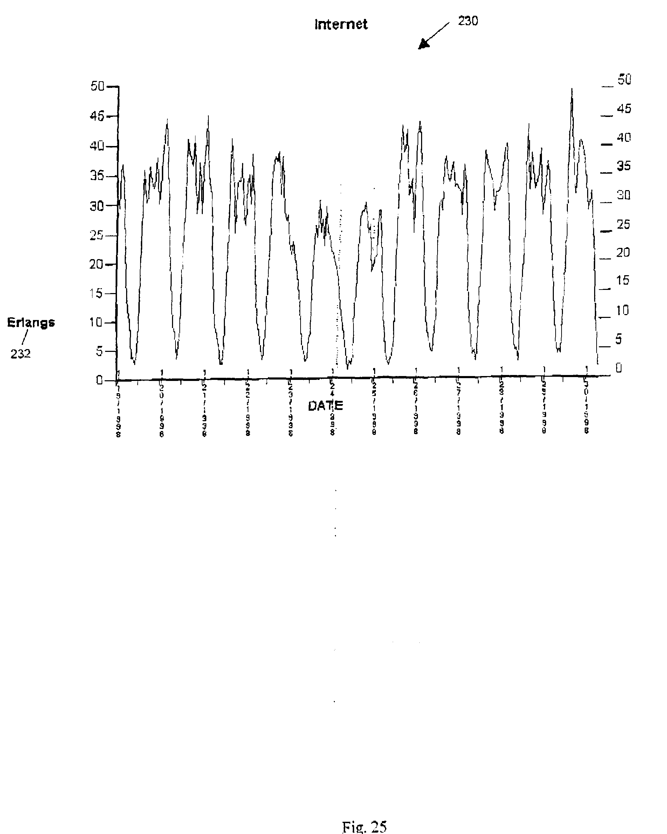

Fig. 25 is a graphical display which illustrates an example of a capacity planning report for an embodiment of the present invention.

### Detailed Description

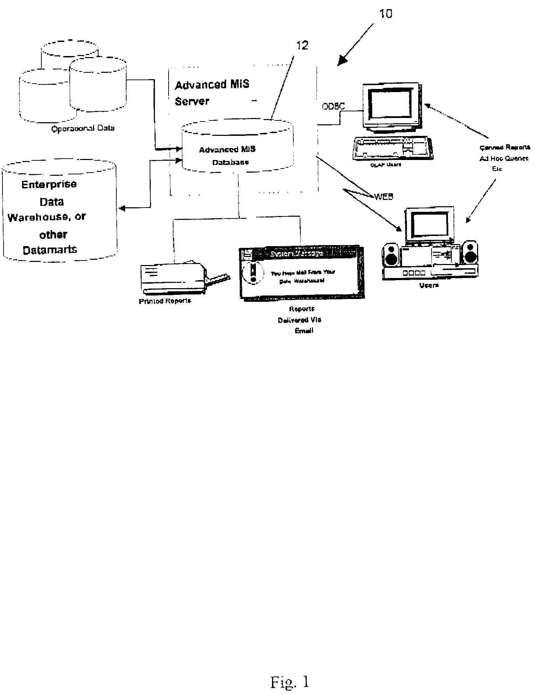

Referring now in detail to an embodiment of the invention, an example of which is illustrated in the accompanying drawings, Fig. 1 is a schematic diagram which shows an example overview of key components and the flow of information between key components for the advanced MIS system 10 for an embodiment of the present invention. In an embodiment of the present invention, use is made, for example, of a computer program which takes the existing messages and the existing software for home banking and uses that as the program for developing messages that go into an MIS database 12, which provides, for example, at least a dozen different types of reports. An example of a type of report that is produced by the system for an embodiment of the present invention is the total number of valid and invalid financial and non-financial transactions that have occurred for a given time period and a total summary for those transactions, as well as the total valid and invalid sessions and those sessions for home banking that were using a particular browser, such as a Netscape browser or an Internet Explorer browser, all in one report.

An example of another type of report that is provided by an embodiment of the present invention is the logs of what occurred, for example, when a customer logged on, what the customer did, how often the customer logged on, and how long the customer did not log on. What is meant by how long the customer did not log on is the inactive trait of the customer, such as whether the customer was inactive, for example, for one, two, or three months, and also when the customer reactivated. An example of still another type of report that the system and method for an embodiment of the present invention provides, entirely with existing home banking software, is a report for function usage. In other words, an embodiment of the present invention enables the grouping of certain functions by category, such as whether they are for information only, or whether they involved transfers or a financial transfer type activity, or whether they involved basically a deposit.

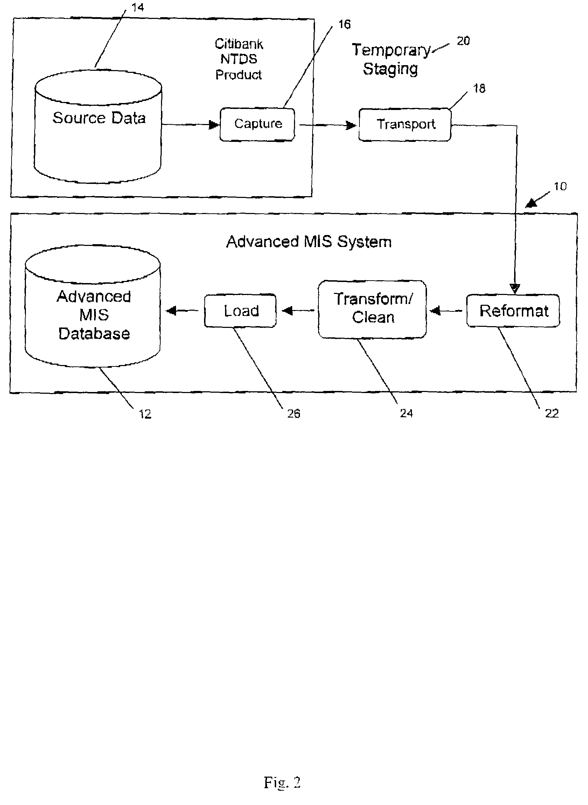

Fig. 2 is a schematic flow chart which illustrates an example of the flow of information between key components of the advanced MIS system 10 for an embodiment of the present invention. For example, in the advanced MIS system 10, source data 14 is captured 16 and transported 18 to a temporary staging area 20, and then reformatted 22, transformed/cleaned 24, and loaded 26 to the advanced MIS database 12. The advanced MIS system 10 addresses deficiencies of current systems, such as failure to save most logging information, a paucity of information in spite of a wealth of data, inflexibility of available tools, and lack of ways to link to other financial institution MIS databases. Sources of the MIS data include, for example, data stored in transaction journal (TJ) logs, system logs, and centrally collected logs for ATMs, and data stored in transaction logs, session time logs, system logs, and centrally collected logs for home banking via a computing device, such as a personal computer (PC). Database warehousing for an embodiment of the present invention makes use of database engines that are fast, special-purpose databases, have built-in security features, provide a large capacity and include Open Database Connectivity (ODBC). Such database warehousing also utilizes front-end tools, such as Online Analytical Processing (OLAP). In addition, such database warehousing utilizes front-end tools that provide graphing, pivot, and statistics, that provide Web access, and that utilize ODBC for easy connection to databases.

Important reasons of data warehousing according to an embodiment of the present invention include, for example, management information focus on marketing and operations support, greater customer-perceived quality from knowledge-base of all NTDS transactions, and knowledge of what occurred, why and where it occurred, whether it will recur. In addition, management and quality indicators are configured and user-defined. Data warehousing provides tools for operations support, for example, in measuring availability and performance, assessing service quality, measuring resource capacity, and improving ATM cash management. Data warehousing also provides tools useful, for example, for market analysis in understanding product usage, customer behavior, reporting of channel usage times, examining of banking and non-banking transactions, and helping to resolving customer problems. In addition, data warehousing provides tools for security regarding access control and role based security. Further, data warehousing makes all information remotely accessible and provides Web access to information.

An embodiment of the present invention provides, for example, a home banking MIS facility that is used for generation of reports on a daily, weekly, and monthly basis and exists as a system for identifying trends, customer behavior, and capacity planning relating to home banking activities. The MIS system 10 for an embodiment of the present invention is a global product that is deployable both domestically and internationally. The system 10 provides for a large-capacity, high performance database 12, and report generation facilities and utilizes data warehousing and OLAP technologies. The data warehousing system 10 provides key functions, such as providing a knowledge-base of all home banking transactions and providing a set of canned reports generated frequently and automatically for subsequent controlled distribution. Additional features include, for example, OLAP query processing (graphical, drill-up/drill-down, and statistics), providing access control and role-based security, and ad hoc query processing.

Actual users of the home banking MIS system 10 for an embodiment of the present invention include, for example, business decision-makers and analysts. Other users are support personnel who are operators that maintain the database 12 by periodically updating and backing up the transactions stored on the database 12. System database administrators have primary responsibility for loading and maintaining the data warehouse 12. Other support personnel produce the actual MIS reports. Log formats are the same across all businesses. The system for an embodiment of the present invention is designed to store data for a pre-defined period of time, such as fourteen months of data. The home banking MIS system 10 utilizes activity logs generated by home banking system applications.

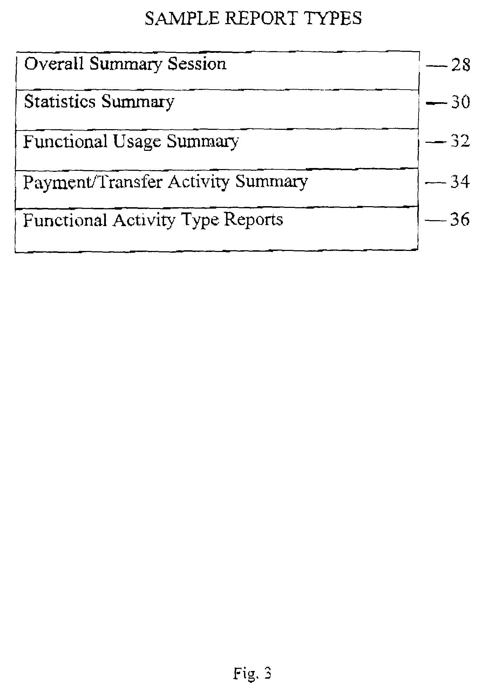

Fig. 3 is a table which illustrates examples of the types of reports provided by the advanced MIS system 10 for an embodiment of the present invention. The advanced MIS system 10 provides various types of reports, such as overall summary session 28, statistics summary 30, functional usage summary 32, payment/transfer activity summary 34, and functional activity type reports 36. The overall summary type report 28 provides, for example, total active users reported by week, month, year, year-to-date (YTD), first-time active users reported by week, month, year, YTD, number of users increase/decrease from previous reporting period by index or percent, and percent increase/decrease from previous reporting period. The session statistics summary type report 30 provides, for example, total sessions in reporting period, number of banking/non-banking sessions, number of sessions/customer in reporting period (mean, variance, and minimum/maximum), number of transactions/session in reporting period (mean, variance, and minimum/maximum), sessions per three-hour group, increase/decrease of each session type in reporting periods, for daily reporting periods, the session times per time period as sessions per day of the week for weekly reporting periods and sessions per week or sessions per day of the month for monthly reporting periods.

The functional usage summary type report 32 provides, for example, number of customers with predetermined ranges of numbers of transactions per reporting period, number of times all functions have been used, and increase/decrease in function usage from reporting periods. The payment/transfer activity type report 34 provides the total number of customers who use the functions, total number of payments/transfers executed within reporting period(s), number of unsuccessful transactions, total amount of all payments/transfers, and increase/decrease from reporting periods. The functional activity type reports 36 provide, for example, total number of times a function was requested, total unsuccessful completions of any kind, completions with successful or unsuccessful error recovery, number of distinct active users accessing functions, number of sessions in which the function was used, and function statistics (mean, median, average, minimum/maximum). Other types of reports include, for example, proof that an individual customer pressed an "I Agree" terms and conditions button, the number of times individual customers log on, length of customer sessions, time of day of use/days of week, individual customers using each transaction type, and concurrent sessions by hour.

The system and method for an embodiment of the present invention is secure, efficient, provides time-meaningful information, is correctable, provides a scalable system architecture, and provides architecturally for web-access. User interfaces for the advance MIS system 10 for an embodiment of the present invention include, for example, charting interfaces, drill-up/drill-down analysis tools, pivot tables, and electronic and hardcopy versions. System interfaces include, for example, procedures for administering the system. Design considerations include standards compliance internally, such as Software Engineering Institute (SEI) Level III, and externally, such as Structured Query Language (SQL)-92 (database design, security and control) and ODBC-3 (database access and remote inquiry). Due to the confidentiality of information contained, the advanced MIS system 10 is installed in a secure (logged personnel entry) data facility. Logs arrive either encrypted, or via secure Internet Protocol (IP). One-way (hashed) encryption is undertaken on specific fields, such as personal identification number (PIN) and logon.

In an embodiment of the present invention, the data warehousing system 10 is a global product that is deployable both domestically and internationally to serve as a window, for example. into a banking network to determine such fundamental questions as how ATMs, also referred to herein as customer activated terminals (CATs), are used, and to determine how to serve home banking users better. In an embodiment of the present invention, various NTDS processes send transaction logging messages to files, which are collected both manually and automatically. These files of transaction logs are in Elementized Message Format (ELF). The advanced MIS system 10 acquires these logs and then performs various processes upon them, until they are finally stored in the physical data warehouse Database Management System (DBMS) 12.

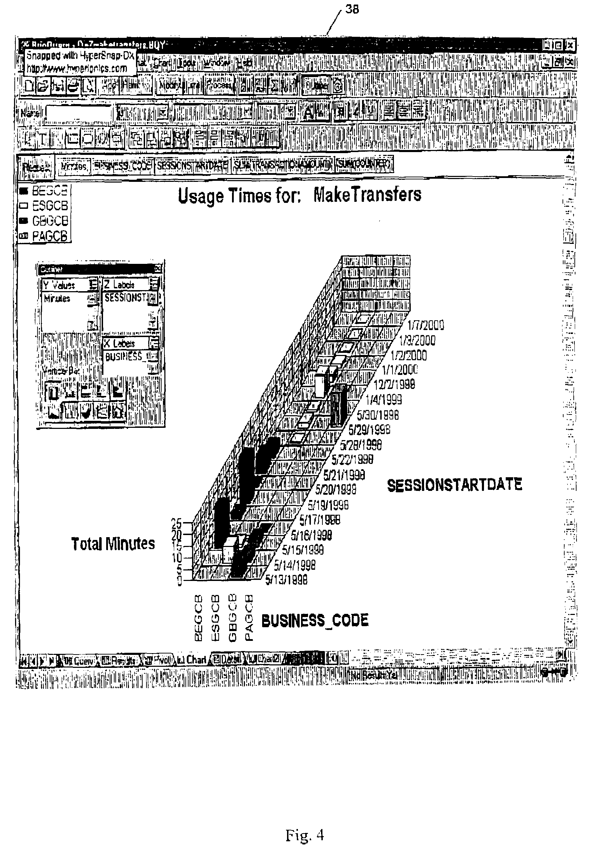

Fig. 4 is a sample Graphical User Interface (GUI) screen 38 which illustrates an example of a typical query that may be run on the data warehouse 12 for an embodiment of the present invention. An OLAP tool is used to query session activity within various bank business. Such queries are made much easier with data warehousing technologies. This is due to the fast query technologies of specialized database engines that are optimized for data warehousing applications. The data warehouse 12 for the advanced MIS system 10 for an embodiment of the present invention is designed architecturally to maintain, for example, the customer activity information which is retrieved from the CAT MIS log, normally read by a peruse utility, and home services session activity.

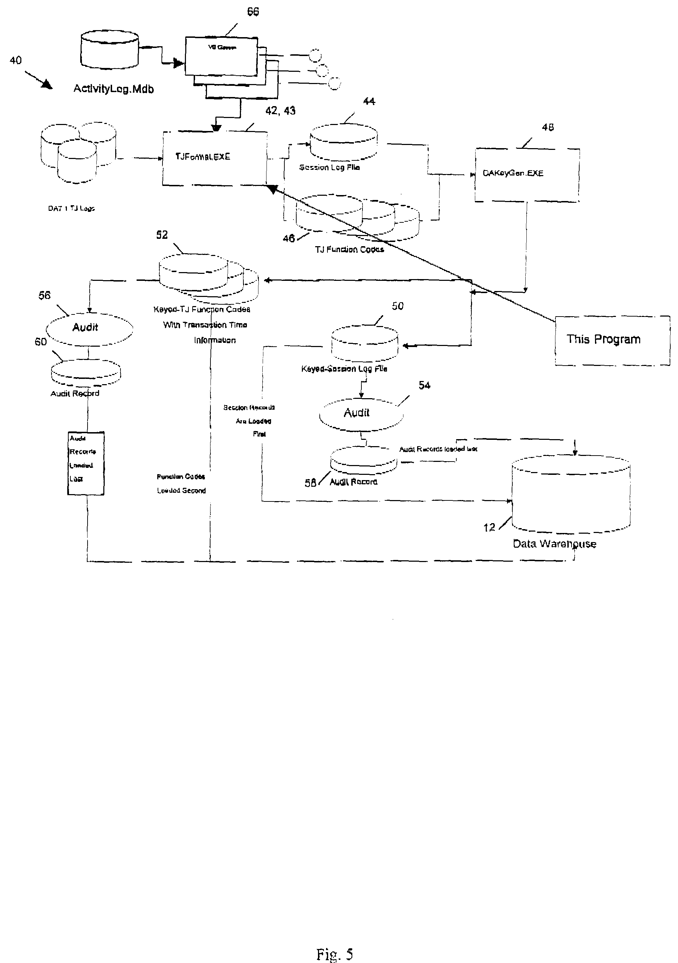

Fig. 5 is a schematic flow diagram which further illustrates and amplifies examples of key components and the flow of information between key components for the advanced MIS system 10 for an embodiment of the present invention. Referring to Fig. 5, the process of maintaining the MIS database 12 includes for example, collecting MIS logs 40 from server nodes and decrypting the logs 40 as necessary, so that the logs 40 are in raw ELF format. The logs 40 are then given as input to program TJFormat.exe 42. The logs 40 are in binary ELF format. The program TJFormat.exe 42 converts all fields to ASCII, produces columnized text, and formats dates and times into recognizable Structure Query Language (SQL) formatted values. The program TJformat. exe 42 examines each transaction entry in the TJ files 40, determines the type of function it is, and writes it to a file. Each line written to the output files is a transaction encountered in the TJ logs 40. The session log file 44 is actually a special occurrence of any other TJ function code 46. It is drawn separately, because the TJ records have a data column that refers back to the session log record, so that all transactions can be grouped by transaction.

Referring further to Fig. 5, the individual ASCII text files are used as input to a DAKeyGen.exe program 48. The program DAKeyGen.exe 48 assigns a unique integer "long" key value to each record in each text file 50. Also, the program DAKeyGen.exe 48 computes beginning-to-end transaction times (in seconds) for each TJ record 40, and writes it to a specified column in the generated output files 52. Next, an audit check 54, 56 is run on the records 50. This produces a single record 58, 60 (per file loaded) that records how many records were in the input file, the date range pertaining to the input file, and the date they were loaded. Home banking system TJ logs 40 are binary-formatted TJ files which are collected from NTDS home banking servers. They are encrypted on-site before they leave the NTDS node. They are then decrypted before processing on the home banking computer system. These logs 40 are in ELF format and consist of records written sequentially by the home banking server. TJFORMAT.EXE 42 is the program that parses the individual TJ records 40 into ASCII text. This is necessary for subsequent SQL processing.

Referring again to Fig. 5, session log files/transaction files 44, 46 are the output files that result from the execution of the TJFORMAT.EXE program 42. They are in plain text format. DAKeyGen.EXE 48 is the program that assigns a unique integer key to each record in each of the session log file/transaction file records 44, 46. This is necessary so that the records 44, 46 can be loaded into a relational database system. Also added at this time is a pre-computed value for the number of seconds that the transaction took to complete. This is computed at this time, because this step would be too laborious to accomplish at run-time. Keyed session log files/transaction files 50, 52 are the result of the execution of the DAKeyGen program 48. These files 50, 52 are in flat-text format, and all columns are separated by a "|" character. The audit 54, 56 and audit records step 58, 60 analyzes how many of the records are duplicated (i.e.; previously loaded), and new. These figures are then written to other database records. The data warehouse 12 is the main functional component of the system 10. All records created from the previous steps are loaded into this database 12.

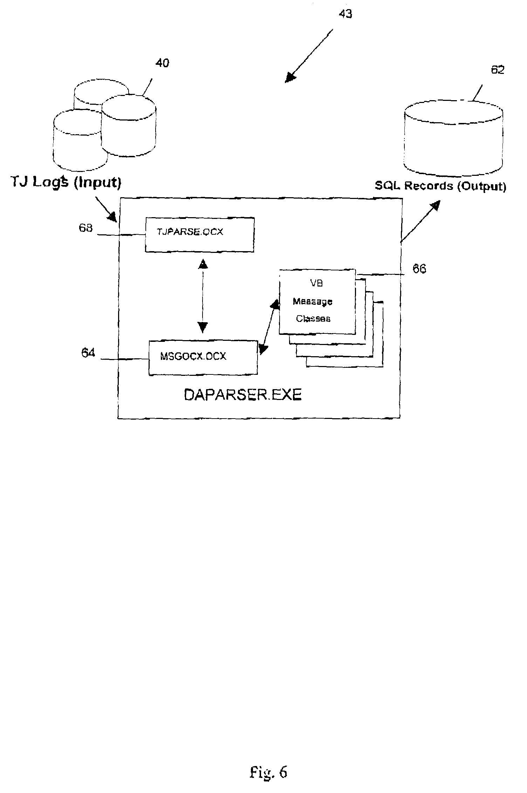

In addition, Fig. 5 illustrates an example of the environment in which a home banking system transaction log parsing and extraction program, also referred to as DAPARSER.EXE 43, for an embodiment of the present invention is used. Fig. 6 is a schematic diagram which illustrates an example of key components and the flow of information between key components for the DAPARSER program 43 for an embodiment of the present invention. The home banking system transaction log parsing and extraction program referred to as DAPARSER.EXE 43 takes home banking TJ logs 40 and produces SQL loadable records 62 and extraction of a range of data. The DAPARSER program 43 depends on a control used for message processing called MSGTOOL.OCX 64 with certain changes to the program. The DAPARSER program 43 reads TJ logs 40 and produces either SQL files for loading into a database 62 or extracts a specific date-range of data out of a TJ file. These log files 40 are in a relatively sophisticated elementized format called ELF. Manually parsing the dozens of different applications logging messages with manually coded "C" programs would require a considerable amount of work and would be quite problematic. A program exists for this purpose called peruse, but it is very heavily dependent on UNIX VT100 display characteristics (libcurses.a). It partly supports the needs and capabilities which the DAPARSER program 43 addresses, but a great deal of legacy functionality exists which is not required. Further, it would be necessary to get peruse to work with data warehousing and to keep track of the config files (peruse.in) for the new messages, which would be a very difficult task.

The solution presented by an embodiment of the present invention is to reuse the Visual Basic (VB) classes 66 that created the log messages for the purpose of re-creating the contents of the message from the log file. After the contents of the messages have been parsed into the individual variables, the DAPARSER program 43 then has the relatively trivial task of writing the individual ELF contents out into a flat-text file of SQL records 62. VB classes created for MIS logs created by the home banking applications that are compatible with both US and Asia CAT releases are modified for this purpose. The DAPARSER program 43 consists architecturally of a number of components. One such component is a VB form used for displaying status, and offering the GUI to the program. It also acts as the container for VB Object Linking and Embedding (OLE) controls. Another such component is a Microsoft OLE control, known as an OCX, for reading the binary TJ input files 40, isolating the individual message buffers and determining function codes of log messages, referred to as TJPARSE.OCX 68.

An additional component of the DAPARSER program 43 for an embodiment of the present invention is the message processing OCX, referred to as MSGOCX.OCX 64. This OLE control parses an ELF formatted binary buffer into VB variables. A further component is the VB class files 66 used for parsing the isolated message buffers. DAPARSER 43 is a VB program. It is started with the names of the input files given on the command line. The program is coded and built as an ".EXE" file that instantiates the TJPARSE.OCX 68 and MSGOCX.OCX 64 on its main form. DAPARSER 43 also includes via the VB object manager all of the known message type class-files that it processes. NTDS applications are written in Visual Basic. The logging activities done by these applications are carried out via VB classes that are built by the applications programmers and used during the applications at run-time for producing log files called TJ logs 40. The parser program DAPARSER 43 takes advantage of the development work that is already/ done with these VB class files. In an embodiment of the present invention, the user interface for program invocation is from a shell script or command line. A VB form is defined in the DAPARSER 43 project workspace, so that the MSGOCX.OCX 64 and TJPARSE.OCX 68 objects can be placed. If necessary, this form is not be shown (i.e.; the "Form.Visible" property is false). This is determined by typical command-line invocations of this program.

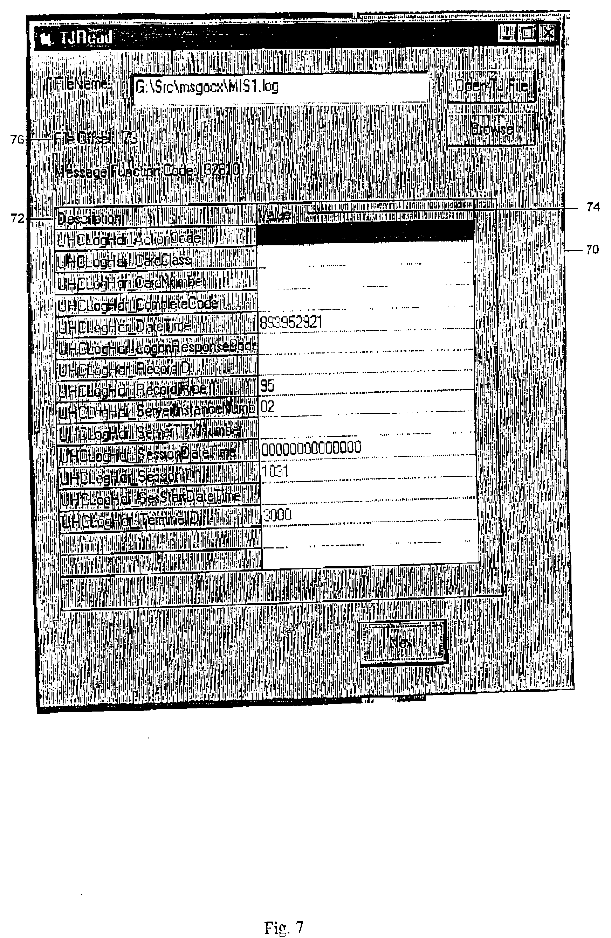

The various user perspectives for which the DAPARSER program 43 for an embodiment of the present invention is designed include, for example, interactive mode, non-interactive SQL dump for data warehousing, and non-interactive mode for MIS data file extraction. An example of interactive mode is:
[C:\]DAPARSER.
This invocation brings up an interactive version of the DAPARSER program 43. Fig. 7 shows a sample GUI screen 70 for the interactive version for an embodiment of the present invention. Referring to Fig. 7, the description column 72 is the description of the ELF contents. The value column 74 is the contents of that ELF in this message instance in the file, given by the file offset 76 shown above the grid. A typical use for the interactive version is as a quick viewer of MIS logs. An example of the non-interactive SQL dump for data warehousing mode of operation is: [C:\] DAPARSER -SO <SQL Output File> -I <TJ Input File(s)>
Where:
- -SO: command-line option specifying output file for SQL.
- - I: command-line option specifying one or more TJ files for processing.
There is no window displayed with this form of invocation of the program. The individual ELF message fields are dumped in the order in which the ELF messages are defined in the VB message class. An example of the non-interactive mode for MIS data file extraction form of invocation is:
[C:\] DAPARSER -BD <Beg. Date> -ED <End Date> -I <TJ Input File(s)> -EO <ELF Output>
Where:
- -EO: Binary-formatted ELF data output file.
- - I: Explained above.
- -BD: Beginning Date from which to start searching MIS files.
- -ED: Ending Date from which to end searching MIS files.

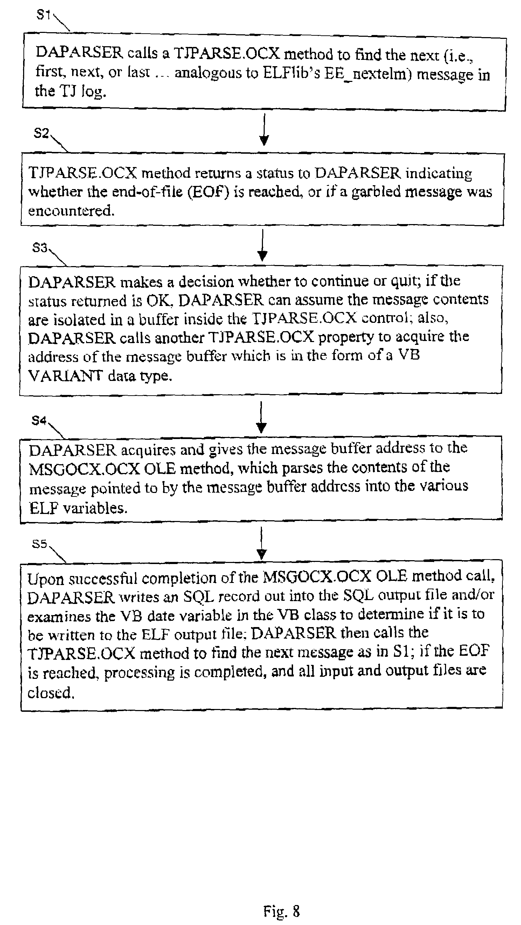

Primary purposes of the program for an embodiment of the present invention are to produce SQL output records 62 from TJ logs 40 for the purpose of data warehousing, and/or to extract a range or MIS log file records, based on a beginning and ending date. Fig. 8 is a flow chart which illustrates an example of the process of producing SQL output records 62 from TJ logs 40 and/or extracting MIS log file records for an embodiment of the present invention. At S1, DAPARSER 43, as the main-loop of processing, calls a TJPARSE.OCX 68 method to find the next (i.e.; first, next, or last... analogous to ELFlib's EE_{_}nextelm) message in the TJ log 40. At S2, a status is returned to the VB caller, DAPARSER 43, indicating whether the end-of-file (EOF) is reached, or if a garbled message was encountered. At S3, the caller, DAPARSER 43, makes a decision whether to continue or quit. If the status returned is OK, DAPARSER 43 can assume the message contents are isolated in a buffer inside the TJPARSE.OCX 68 control. Also at S3, the caller, DAPARSER 43, calls another TJPARSE.OCX 68 property to acquire the address of the message buffer. This message buffer address is in the form of a VB VARIANT data type. At S4, the message buffer address is then given to the MSGOCX.OCX OLE 64 method that parses the contents of the message pointed to by the message buffer address into the various ELF variables. Upon successful completion of this method call, at S5, the VB caller-program, DAPARSER 43, then does either or both of writing an SQL record out into the output file 62 and examining the VB date variable in the VB class 66, to determine if it is to be written to the ELF output file. Also at S5, DAPARSER 43 calls the TJPARSE.OCX 68 method to find the next message as in the first step. If the EOF is reached, processing is completed, and all input and output files are closed.

Specific and high-level OLE control interface descriptions are used by the DAPARSER program 43 for an embodiment of the present invention. The OCX, TJPARSE.OCX 68, exists to read the binary TJ log file 40 and to isolate individual log messages into a buffer space. It provides number of Application Program Interfaces (API's). Fig. 9 is a table which shows examples of APIs provided by the TJPARSE.OCX OLE control for an embodiment of the present invention. Referring to Fig. 9, TJPARSE.OCX 68 provides APIs, such as initialization 78, isolating the next TJ message 80, returning the TJ message log buffer address 82, open ELF output file 84, write ELF output file 86, and close ELF output file 88. The initialization API 78 is provided for opening a TJ log file and doing any internal initialization steps. The user sees the initialization API 78 as:
Form.TJParse.Init("C :\TJ_FILEAME")
If a file was already opened, it is closed and the new file is opened and initialized.

The isolating the next TJ message API 80 is provided for positioning to the next message in the TJ log 40, reading the contents, and inserting it in a static buffer. The user sees this isolating the next TJ message API 80 as:
Dim Return_Status as Long
   ...
Return_Status = Form.TJParse.NextMsg
The statuses that can be returned on this method invocation are:
1 - 65K = Function Code
0 = EOF
-1 = A Garbled section of the TJ log was encountered.
If "0" was received, DAPARSER 43 may decide to quit, or move on to another TJ file.
If"-1" was encountered, DAPARSER 43 may decide to either quit, or continue to the next recognizable section of the TJ log 40. Otherwise, this OLE method returns the function code of the message found in the TJ log 40.

The Returning The TJ Message Log Buffer Address API is provided so that DAPARSER _ can provide MSGOCX.OCX a memory address for message processing. Dim BuffAddr as Variant
... BuffAddr = Form.TJParse.MsgAddr

For writing the TJ message log buffer to a file, three API's are provided, based somewhat on UNIX-type file operations. The three API's are for opening the output file 84, writing 86, and closing 88. This control only allows one output file to be opened at a time. The open ELF output file API 84 is provided so that DAPARSER 43 can isolate MIS data on certain criteria, such as a date range, and write them to an output file.
...
ret_Status = Form.TJParse.Fopen("C :\TEMP\MISOUT", "A")
Where the second parameter is "A" (for append), or "W" for over-write.
ret_Status will be either "0" (file written okay), or "EOF" (an error occurred.)
The write ELF output file API 86 is provided so that DAPARSER 43 can isolate MIS data on certain criteria, such as a date range. and write them to an output file.
... BuffAddr = Forrn.TJParse.Fwrite()
No parameters are used. The buffer address used is the internal memory address used by the OLE control. The close ELF output file API 88 is provided so that DAPARSER 43 can shut the output file, and possibly start another output file.
...
ret_Status = Form.TJParse.FClose
ret_Status is either "0" (file written okay), or "EOF" (an error occurred.)
The OCX control, MSGOCX.OCX 64, is used and designed and is part of a VBTOOLS product. However, another OLE API method is developed for this control. This API relates to parsing a program-supplied message buffer address. Currently, the message OCX parses a message buffer that is received from the message server program. No direct API is exposed to this functionality, because up to this point, the only need for NTDS VB programmers was for process-to-process interaction with messages. The invocation of the new method for an embodiment of the present invention is:
1: Dim BuffAddr as Variant
2: Dim Return_Status as integer
3: Form.TJParse.Init("C:\TJ_FILEAME")
4: Return_Status = Form.TJParse.NextMsg
5: BuffAddr = Form.TJParse.MsgAddr
6: MsgClassFile.Msgocx.Parse(BuffAddr)

In summary, the OLE parse method for an embodiment of the present invention is an API to a previously hidden internal subroutine. The crucial functionality of this subroutine is that of parsing the message server's message buffer into variables within a VB class file. This subroutine is made public via an OLE property so that a VB program can parse a binary buffer into VB class variables. The Return_Status (line 4 in the preceding paragraph) has the message function code, which is used to determine which VB class is to be populated by the MSGOCX.OCX 64 parse method. The preferred way to accomplish this is with a casestructure within the DAPARSER program 43:
...
   Select Case Return_Status
   Case Begin_Session ' example: 6400
BeginSessionClassFile. Msgocx.Parse(BuffAddr)
   Case End_Session ' example: 6401
EndSessionClassFile. Msgocx.Parse(BuffAddr)
   ...

Utilizing all of the API's and information described, the operation of extracting MIS Log file records in a specified date range occurs as follows:

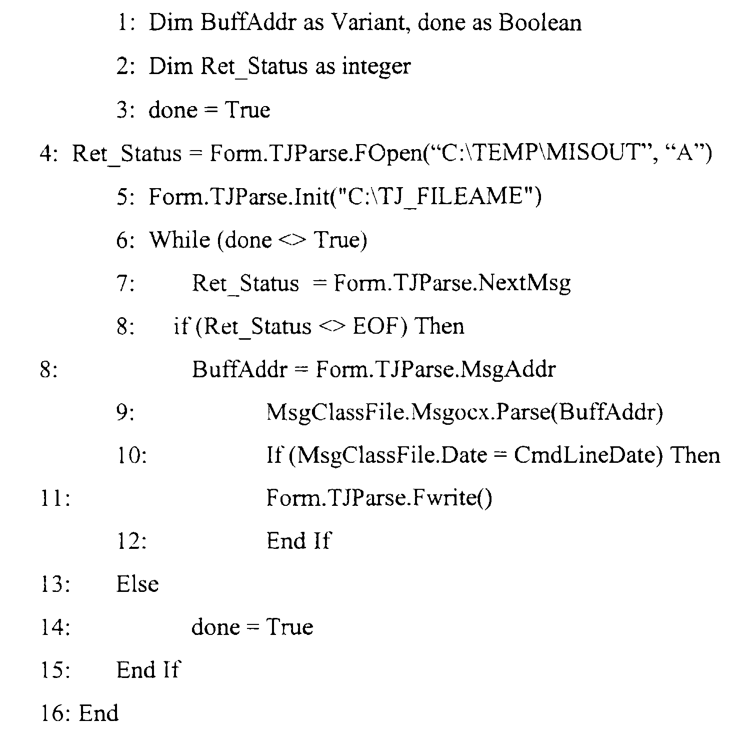

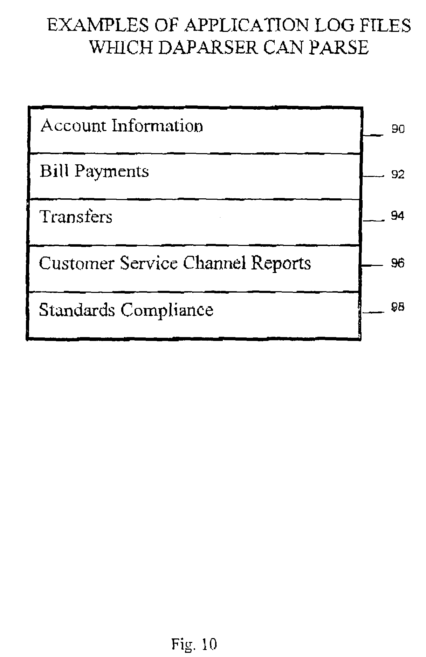

Fig. 10 is a table which shows examples of applications, the log files of which the DAPARSER program 43 for an embodiment of the present invention is capable of parsing. Referring to Fig. 10, the DAPARSER program 43 can parse log files produced by applications, such as account information 90, bill payments 92, transfers 94, customer service channel reports 96, and standards compliance 98.

In an embodiment of the present invention, there are a number of definitions relevant to reporting. For example, for reporting purposes, users are categorized by their usage of the home banking system. Fig. 11 is a table which shows examples of categories of users according to usage of a home banking system. The categories include, for example, continuously active user 100, first time active user 102, resumed active user 104, one month inactive user 106, two month inactive user 108, and no longer active user 110. A continuously active user 100 is defined as a customer who has at least one valid session for the current month and at least one valid session for the preceding month. A first time active user 102 is defined as a customer who has at least one valid session for the current month and has never been active before. A resumed active user 104 is defined as a customer who has at least one valid session for the current month and had no valid sessions for the preceding month. A one month inactive user 106 is defined as a customer who has no valid sessions for the current month, but had at least one valid session for the preceding month. A two month inactive user 108 is defined as a customer who has no valid sessions for the current or preceding month, but had at least one valid session for the month two months before. For example, for December, the two month inactive user 108 did not have any valid sessions in December or November, but did have a valid session in October. A no longer active user 110 is defined as a customer who has no valid sessions for the current month and the preceding two months, but had at least one valid session some time in the past. The user or customer count is defined as the number of distinct customer identification numbers or login ID numbers associated with all successful logons or valid sessions for the time period on which is being reported.

In the system for an embodiment of the present invention, session MIS data is contained in log records with Log Record Type = 1 (Session Log On), 2 (Session Log Off). These records are used for generating session-related MIS reports. Transaction MIS data is contained in log records with Log Record Type = 4 (Dialog Transaction Completion Log) which are used for generating transaction-related MIS reports. Service provider message error MIS data is contained in log records with Log Record Type = 3 (Dialog Transaction Recoverable FEP Action Code) which are used for generating transaction-related message error reports. An attempted sessions means any session in which a customer attempted to access the home banking system. Each attempt is defined by whether the customer ID entered by the customer was found on the customer verification system. This corresponds to the existence of a start of session activity log record (Log Record Type 1). These sessions include both successful and unsuccessful logons. A valid session or successful logon means a session in which a customer successfully logged onto the home banking system. Each successful logon is defined by the display of the "menu" screen. This corresponds to the existence of a start of session activity log record (Log Record Type 1) with a completion code of "0" (successful completion) or "10" (recoverable logon error occurred).

In an embodiment of the present invention financial transactions means those transactions that result in the movement of money to or from a customer's account. Fig. 12 is a table which illustrates examples of functions that are considered to be financial transactions for an embodiment of the present invention. Non-financial transactions means all transactions that are have not been defined as financial transactions. Fig. 13 is a table which illustrates examples of functions that are considered to be non-financial transactions for an embodiment of the present invention. Attempted transactions are those home banking system functions/transactions that customers have attempted to perform. Each attempt is defined by the customer's selection of a home banking system function from a navigation channel or a menu. This corresponds to the existence of a transaction completion activity log record (Log Record Type 4). The definition of attempted transactions includes both successfully completed and unsuccessfully completed transactions. Successful transactions means those home banking system functions/transactions that customers have successfully completed. Each successful transaction has a transaction completion activity log record with Completion Status Code = 0 (Transaction successfully completed). Failed transactions mean transactions that have Completion Status Code <> 0. Fig. 14 is a table which illustrates examples of applicable non-zero completion status codes for an embodiment of the present invention.

For reporting purposes in an embodiment of the present invention, time periods are also defined. A day is defined as extending from 12:00:01 AM to 12 midnight, and a week is defined as extending from 12:00:01 AM Monday to 12 midnight Sunday. When a session crosses a day/week boundary, it is considered to occur during the day/week the session began. A personal computer with a web browser that supports frames and Javascript is a customer access device type for a home banking system for an embodiment of the present invention, and two suitable browsers are Netscape and Internet Explorer. Customer access network types include, for example, Internet and private network, either or both of which types of access network may be implemented for a given instance of the home banking system product.

Fig. 15 is a table which shows a list of examples of standard reports for an embodiment of the present invention. Standard reports include, for example, a session summary report 112, a usage comparison report 114, a functions summary report 116, a customer activation /usage report 118, a session completion details report 120, error reports 122, and functions detail reports 124. The session summary report 112 is a weekly, monthly, or yearly report. Fig. 16 shows a sample layout of a weekly session summary report 112 for an embodiment of the present invention. The weekly report 112 presents data for one week; the monthly report for one month; and the yearly report for one year. The weekly and monthly reports provide data for each day of the week/month being reported on, and a set of totals 114 for that week month at the bottom of the report page. The yearly reports provide the totals for each month and a yearly total. Referring to Fig. 16, Netscape sessions 116 is the number of valid sessions where the customer used a Netscape browser; IE sessions 118 is the number of valid sessions where the customer used an Internet Explorer browser; successful financial transactions 120 is the number of financial transactions that were attempted and completed successfully; successful non-financial transactions 122 is the number of non-financial transactions that were attempted and completed successfully; and failed transactions 124 is the number of both financial and non-financial transactions that were attempted but did not complete successfully.

Referring further to Fig. 16, average valid sessions per user 126 is the average number of valid sessions per user calculated by dividing the number of valid sessions by the number of users; average transactions per session 128 is the average number of both successful and failed transactions per valid session; and average valid session (minutes) 130 is the average length in minutes of a valid customer session. In order to minimize the effect of customer time-outs, for valid sessions that end due to a customer time-out, the session length of each of those sessions is reduced by a predetermined time, such as 6 minutes (the standard session time out value). The time-out value is configurable by the business. The total user count for the reporting period is not simply the sum of the counts for each day but must take into account duplicates across the days in the reporting period. The total for the three averages is not simply the average of the averages for each day but must be the average computed using the actual totals for the reporting period.

Fig. 17 shows a sample layout for a usage comparison report 114 for an embodiment of the present invention. The usage comparison report 114 is a weekly, monthly, or yearly report. The weekly report presents data for the week being reported on and the preceding week. The monthly report presents data for the month being reported on and the preceding month. The yearly report presents data for the year being reported on and the preceding year. The usage comparison report 114 provides the actual values for information for the current reporting period, the immediately preceding reporting period and the percent change of these values between the reporting periods. Netscape sessions 132 is the number of valid sessions where the customer used a Netscape browser; IE sessions 134 is the number of valid sessions where the customer used an Internet Explorer browser; successful financial transactions 136 is the number of financial transactions that were attempted and completed successfully; successful non-financial transactions 138 is the number of non-financial transaction that were attempted and completed successfully; and failed transactions 140 is the number of both financial and non-financial transactions that were attempted but did not complete successfully.

Fig. 18 illustrates an example of a functional summary report 116 for an embodiment of the present invention. Note that the sample contains only representative examples of the functions that can appear in the final report. The functional summary report 116 may also present its results in a graphical format. The functional summary report 116 is a weekly, monthly, or yearly report for all functions. The functions are grouped within function groups, such as account information 142 and payments/external transfers 144, as well as standard transfers, global transfers, direct debits, customer service, and brokerage.

Fig. 19 shows examples of functions within the function groups 146 for an embodiment of the present invention. Referring further to Fig. 18, attempts 148, percent of all attempts 150, successful completions 152, percent of all successful completions 154, users 156, percent of all users 158, percent of sessions with function 160, and transaction time 162 is shown for each function, subtotals 164 are shown for each function group, and grand totals 166 are shown for all functions. Attempts 148 is the number of attempted uses of this function; percent of all attempts 150 is attempted uses of this function as a percentage of attempted uses of all functions for this reporting period; successful completions 152 is the number of successful completions of this function; percent of all successful completions 154 is successful completions of this function as a percentage of successful completions of all functions for this reporting period; users 156 is the number of different users that attempted to use this function; and percent of all users 158 is users that attempted to use this function as a percentage of all users (different users) of all functions for this reporting period. Percent of sessions with function 160 is percentage of sessions with attempted uses of this function, and transaction time - avg (minutes) 162 is the average length, in minutes, of successful transactions. The total user count for the reporting period is not simply the sum of the counts for each function but must take into account duplicates across the functions.

Fig. 20 illustrates an example layout of a customer activation usage report 118 for an embodiment of the present invention. The customer activation usage report 118 presents a summary for a pre-defined period, such as the last six months, of customer activation and usage. For each month, data is shown, for example, for continuously active users 168, first time active users 170, resumed active users 172, one-month inactive users 174, two-month inactive users 176, no longer active users 178, total number of active users 180, and total number of users 182. Continuously active users 168 are users that have at least one valid session for the current month and at least one valid session for the preceding month; first time active users 170 are users that have at least one valid session for the current month and have never been active before; resumed active users 172 are users that have at least one valid session for the current month and had no valid sessions for the preceding month; one-month inactive users 174 are users that have no valid sessions for the current month, but had at least one valid session for the preceding month; and two-month inactive users 176 are users that have no valid sessions for the current or preceding month, but had at least one valid session for the month two months before. For example, for the December column, the customer did not have any sessions in December or November, but did have a valid session in October. No longer active users 178 are users that have no valid sessions for the current month and the preceding two months, but had at least one valid session some time in the past, and total number of active users 180 is the number of users that have at least one valid session for the current month. This should equal the sum continuously active 168, first time active 170, and resumed active users 172. Total number of users 182 is the number of users that have a least one valid session since the launch of the product. This should equal the sum of the users in the six different categories defined in this report.

Session details reports 120 for an embodiment of the present invention are weekly or monthly reports. Fig. 21 shows an example of a session-completion report 120 for an embodiment of the present invention. The session-completion report 120 provides information for each day, as well as totals for the reporting period, such as valid sessions 184, sessions w/sign-off- count 186, sessions w/sign-off - percent of all 188, sessions w/timeout-count 190, sessions w/timeout - percent of all 192, sessions w/other end: - count 194, and sessions w/other end - percent of all 196. Valid Sessions 184 is the number of valid customer sessions; sessions w/sign-off- count 186 is the number of valid customer sessions where the customer ended the session by selecting sign-off; sessions w/sign-off- percent of all 188 includes valid customer sessions where the customer ended the session by selecting sign-off as a percentage of all valid sessions; sessions w/timeout - count 190 is the number of valid customer sessions that ended due to a session time out (session end record with completion code of 4); sessions w/timeout - percent of all 192 is the number of valid customer sessions that ended due to a session time out as a percentage of all valid sessions; sessions w/other end - count 194 is the number of valid customer sessions that ended due to some reason other than a customer sign-off or timeout; and sessions w/other end - percent of all 196 is the number of valid customer sessions that ended due to some reason other than a customer sign-off or timeout as a percentage of all valid sessions.

Fig. 22 shows a sample layout of a session-error report 122 for an embodiment of the present invention. The session-error report 122 provides information for each day as well as totals for the reporting period, such as valid sessions 200, sessions w/o error - count 202. sessions w/o error - percent of all 204, session w/FEP errors - count 206, session w/FEP errors - percent of all 208, session w/other errors - count 210, and session w/other errors-percent of all 212. Valid sessions 200 is the number of valid customer sessions; sessions w/o error - count 202 is the number of valid customer sessions that had no errors. These are session where all associated transaction activity log records have a completion code = 0. This should include sessions that end with a time-out. Sessions w/o error - percent of all 204 is the number of valid customer sessions that had no errors as a percentage of all valid session, and session w/FEP errors - count 206 is the number of valid customer sessions with one or more recoverable FEP messages. These are sessions that contain one or more activity log records of record type 3 (Transaction Recoverable FEP Action Code). Session w/FEP errors-percent of all 208 is the number of valid customer sessions with one or more recoverable FEP messages as a percentage of all valid sessions, and session w/other errors - count 210 is the number of valid customer sessions with errors other than recoverable FEP errors. These are sessions that contain one or more transaction activity log records of record type 3 with a completion code not equal to 0. Session w/other errors - percent of all 212 is the number of valid customer sessions with errors other than recoverable FEP errors as a percentage of all valid session.

Fig. 23 shows a sample layout of an error ranking report 122 for an embodiment of the present invention. The error ranking report 122 is a weekly or monthly report that presents a listing of all errors occurring during valid customer sessions. For the error ranking report 122, an error is defined as an activity log record with an action code 214 not equal to zero. The report provides information for each error, such as action code 214, description 216, count 218, percent of all 220, and users 222. Action code 214 is the value of action code in the activity log record; Description 216 is the description of the action code 214; count 218 is the number of occurrences of this action code 214 in all valid customer sessions; percent of all 220 is the number of occurrences of this action code 214 as a percentage of all errors (nonfor this reporting period); and users 222 is the number of different users that encountered this error. The entries in the error ranking report 122 are sorted by frequency, most occurrences at the top. The log record types that are used in generating the error ranking report 122 include, for example, 2 (session log off), 3 (dialog transaction recoverable FEP action code), 4 (dialog transaction completion log), and 5 (profile failure).

Fig. 24 illustrates an example of a sample layout of a function details reports-transfers 124 for an embodiment of the present invention. Each function has its own details report. The data on which is reported consists of standard data common to all functions and detailed data that varies by function, depending on what options a particular customer has in using the function. The standard data for each function includes, for example, number of attempts 224, number of good completions 226, and number of users 228, as well as number of customer-initiated early terminations (selection of Exit or a navigation channel). Fig. 25 is a graphical display which illustrates an example of a capacity planning report 230 for an embodiment of the present invention. The capacity planning report 230 is a weekly or monthly report. The "Erlangs" axis 232 provides the simultaneous session-minute usages on a per-day or per-hour basis. The capacity planning report 230 is for satisfying requirements for providing a report to help size server capacity.

There are many types of services that are always being brought to bear within the home banking system, and the MIS system and method for an embodiment of the present invention provides a means for people to log in and easily produce these reports without any changes basically to existing software systems, other than importing the applications which sent the message originally to and from the home banking server.

### Definitions, Acronyms, Abbreviations:

CAT - Customer Activated Terminal
DA - Direct Access
ELF - Elementized Message Format
GUI - Graphical User Interface
INC - Integrated Network Control
MIS - Management Information System
MPP - Massively Parallel Processing
MSGOCX.OCX - Message Control OCX
OCX - Microsoft OLE Control
ODBC - Open Database Connectivity
OLAP - Online Analytical Processing
OLE - Object Linking and Embedding
PCR - Product Change Request
PT - Product Test
RDBMS - Relation Database Management System
SCR - System Change Request
SD - Software Distribution
SMP - Symmetric Multi Processing
SPP - Symmetric Parallel Processing
SQA - Software Quality Assurance
SQL - Structured Query Language
STR - System Trouble Report
TJ - Transaction Journal
TJPARSE.OCX - An OLE Control proposed in this document
VB - Visual Basic

Various preferred embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the spirit and scope of the present invention.

## Claims

1. A method for producing advanced management information systems (MIS) information from source transaction data, comprising:
capturing source transaction data written sequentially in a pre-defined binary format from a database storing the data;
parsing the source transaction data to a plain text file format;
assigning a unique integer key value to each of a plurality of individual transaction records in each of a plurality of plain text output files; and
loading the output files to a relational database management system.

2. The method of claim 1, wherein capturing the source transaction data further comprises capturing the data written sequentially in a pre-defined binary elementized message format from the database.

3. The method of claim 1, wherein capturing the source transaction data further comprises capturing at least one of automatic teller machine (ATM) source transaction data and home banking system source transaction data from the database.

4. The method of claim 3, wherein capturing the ATM source transaction data further comprises capturing ATM transaction journal logs from the database.

5. The method of claim 3, wherein capturing the home banking system source transaction data further comprises capturing home banking system transaction journal logs from the database.

6. The method of claim 1, wherein capturing the source transaction data further comprises storing the source transaction data from at least one of an ATM system server and a home banking system server by the database.

7. The method of claim 6, wherein storing the ATM system source transaction data further comprises storing ATM transaction journal logs by the database.

8. The method of claim 7, wherein storing the ATM transaction journal logs further comprises decrypting the ATM transaction journal logs.

9. The method of claim 6, wherein storing the home banking system source transaction data further comprises storing home banking system transaction journal logs by the database.

10. The method of claim 9. wherein storing the home banking system transaction journal logs files further comprises decrypting the home banking system transaction journal logs.

11. The method of claim 1, wherein parsing the source transaction data further comprises parsing individual transaction records to ASCII text file format.

12. The method of claim 11, wherein parsing the individual transaction records further comprises converting all fields in the individual transaction records to ASCII text file format.

13. The method of claim 11, wherein parsing the individual transaction journal records further comprises producing columnized text for the individual transaction records.

14. The method of claim 11, wherein parsing the individual transaction journal records further comprises formatting dates and times of the individual transaction records into recognizable Structured Query Language (SQL) formatted values.

15. The method of claim 1, wherein parsing the source transaction data further comprises examining each of a plurality of transaction entries of the source transaction data to determine a type of function of each transaction corresponding to a transaction entry.

16. The method of claim 15, wherein parsing the source transaction data further comprises writing each transaction encountered in examining the transaction entries of the source transaction data as a line to an output file.

17. The method of claim 15, wherein parsing the source transaction data further comprises grouping all transactions encountered in examining the transaction entries of the source transaction data by transaction according to a data column of a transaction journal record that refers back to a session log record.

18. The method of claim 1, wherein assigning the unique integer key value further comprises assigning the unique integer key value to each individual transaction record in each of a plurality of ASCII text output files.

19. The method of claim 1, wherein assigning the unique key value further comprises writing the integer key value to a pre-defined column in each output file for loading to the relational database system.

20. The method of claim 19, wherein assigning the unique integer key value further comprises computing transaction times for each of the individual transaction records.

21. The method of claim 20, wherein computing the transaction times further comprises adding the computed transaction time to each output file.

22. A method for producing advanced management information systems (MIS) information from source transaction data, comprising:
reading at least one transaction journal log written in a pre-defined binary format to isolate a transaction message in a message buffer;
parsing the contents of the isolated transaction message;
writing out the parsed contents into a flat-text file of Structured Query Language (SQL) records into an output file loadable into a database re-using at least one Visual Basic (VB) class used for creating the transaction journal log; and
storing the output file in the database.

23. The method of claim 22, wherein reading the transaction log further comprises reading the transaction log for at least one financial institution application selected from a group consisting of an account information application, a bill payment application, a transfer application, a customer service channel report application, and a standards compliance application.

24. The method of claim 22, wherein reading the transaction journal log further comprises reading the transaction journal log written in a binary elementized message format.

25. The method of claim 22, wherein reading the transaction journal log further comprises reading a binary transaction journal log input file.

26. The method of claim 22, wherein reading the transaction journal log further comprises isolating the transaction message buffer.

27. The method of claim 26, wherein isolating the transaction message buffer further comprises determining at least one function code of the transaction message.

28. The method of claim 22, wherein reading the transaction journal log further comprises reusing at least one Visual Basic (VB) class that created the transaction message to re-create the contents of the transaction message from the transaction journal log.

29. The method of claim 28, wherein reusing the VB class to re-create the contents of the transaction message further comprises writing the transaction message in VB and via the VB class to produce the transaction journal log.

30. The method of claim 22, wherein reading the transaction journal log further comprises reading the transaction journal log by a VB application.

31. The method of claim 30, wherein reading the transaction journal log further comprises reading the transaction journal log by the VB application having a command line for a user interface for invocation.

32. The method of claim 31, wherein reading the transaction journal log further comprises reading the transaction journal log by the VB application which is started with the name of an input file given on the command line.

33. The method of claim 30, wherein reading the transaction journal log further comprises reading the transaction journal log by the VB application that includes via a VB object manager all known message type class-files that the VB application processes.

34. The method of claim 30, wherein reading the transaction journal log further comprises reading the transaction journal log by a VB object linking and embedding (OLE) control component (TJPARSE.OCX) of the VB application.

35. The method of claim 34, wherein reading the transaction journal log further comprises defining a VB form as a container for at least one VB OLE control component (MSGOCX.OCX and TJPARSE.OCX).

36. The method of claim 35, wherein defining the VB form as a container for the VB OLE control component further comprises defining the VB form that also displays status and offers a GUI to the VB application.

37. The method of claim 30, wherein reading the transaction journal log further comprises calling a method (TJPARSE.OCX) by the VB application to find a next transaction message in the transaction journal log.

38. The method of claim 37, wherein finding the next transaction message further comprises returning a status to the VB application indicating one of if an end-of-file was reached and if a garbled message was encountered.

39. The method of claim 37, wherein finding the next transaction message further comprises isolating the transaction message into a buffer space.

40. The method of claim 39. wherein isolating the transaction message further comprises calling a property of the called method (TJPARSE.OCX) to acquire an address of the message buffer space.

41. The method of claim 40, wherein isolating the transaction message further comprises acquiring the message buffer space address in the form of a VB Variant data type.

42. The method of claim 37, wherein reading the transaction journal log further comprises invoking an initialization Application Program Interface (API) by the called method for opening a transaction journal log file.

43. The method of claim 42, wherein invoking the initialization API further comprises performing an internal initialization.

44. The method of claim 43, wherein invoking the initialization API further comprises closing a previously opened file, if a file was previously opened.

45. The method of claim 42, wherein invoking the initialization API further comprises opening and initializing a new transaction journal log file.

46. The method of claim 37, wherein reading the transaction journal log further comprises invoking an isolating the next transaction journal message API by the called method for positioning the next transaction message in the transaction journal log, reading the transaction message contents, and inserting the transaction message in a static buffer.

47. The method of claim 46, wherein invoking the isolating the next transaction journal message API further comprises returning a status to the VB application selected from a group of statuses indicating at least one of a function code for the transaction message, if an end-of-file in the transaction journal log was reached, and if a garbled section of the transaction journal log was encountered.

48. The method of claim 47, wherein invoking the isolating the next transaction journal message API further comprises electing one of quitting and moving on to another transaction message, if the end-of-file status is returned.

49. The method of claim 47, wherein invoking the isolating the next transaction journal message API further comprises electing one of quitting and continuing to a next recognizable section of the transaction journal log, if the garbled section of the transaction journal log status is returned.

50. The method of claim 47, wherein invoking the isolating the next transaction journal message API further comprises returning a function code for the message, if the function code status is returned.

51. The method of claim 50, wherein invoking the isolating the next transaction journal message API further comprises using the returned message function code to determine a VB class to populate.

52. The method of claim 37, wherein reading the transaction journal log further comprises invoking a returning a transaction message buffer address API for returning the transaction message buffer address.

53. The method of claim 52, wherein returning the transaction message buffer address further comprises returning an internal message buffer memory address used by a message processing method.

54. The method of claim 22, wherein parsing the contents of the transaction message further comprises parsing the contents of the message into individual ELF variables by a VB application component (MSGOCX.OCX).

55. The method of claim 54, wherein parsing the contents of the transaction message further comprises parsing an ELF formatted binary transaction message buffer into VB variables by a message processing VB application component (MSGOCX.OCX).

56. The method of claim 54, wherein parsing the contents of the transaction message further comprises parsing the isolated transaction message buffer by a message processing VB application component consisting at least in part of a VB class file.

57. The method of claim 54, wherein parsing the contents of the transaction message further comprises parsing the isolated transaction message buffer by an API method via an application-supplied transaction message buffer address.

58. The method of claim 54, wherein parsing the contents of the transaction message further comprises parsing the isolated transaction message buffer into variables within a VB class file via an API to an internal subroutine.

59. The method of claim 58, wherein parsing the contents of the transaction message further comprises parsing the isolated transaction message buffer into VB class variables via the internal subroutine which is made public via an OLE property.

60. The method of claim 22, wherein writing out the parsed contents further comprises writing out parsed elementized message format contents into the flat text file of SQL records.

61. The method of claim 60, wherein writing out the parsed elementized message format contents into the flat text file of SQL records further comprises invoking an open elementized message format output file for opening the output file.

62. The method of claim 61, wherein writing out the parsed elementized message format contents into the flat text file of SQL records further comprises invoking a writing the elementized message format output file for writing out the parsed elementized message format contents on a pre-defined date range to the output file.

63. The method of claim 62, wherein writing out the elementized message format contents into the flat text file of SQL records further comprises invoking a closing the elementized message format output file for closing the elementized message format output file.

64. The method of claim 63, wherein writing out the elementized message format contents into the flat text file of SQL records further comprises starting another elementized message format output file.

65. The method of claim 22, wherein writing out the parsed contents further comprises finding a next transaction message in the transaction log.

66. The method of claim 65, wherein finding the next transaction message further comprises closing all input and output files, if an end-of-file is reached.

67. The method of claim 22, further comprising extracting a predefined date-range of transaction log files out of the transaction journal log based on a predetermined beginning and ending date.

68. The method of claim 67, wherein extracting the predefined date-range of transaction log files further comprises examining a VB date variable in a related VB class.

69. The method of claim 67, wherein extracting the predefined date-range of transaction log files further comprises writing out the pre-defined date-range of transaction log files to the output file.

70. The method of claim 22, further comprising running an audit check on the SQL records.

71. The method of claim 22, further comprising providing at least one type of report from the database selected from a group consisting of an overall summary session type of report, a statistics summary type of report, a functional usage summary type of report, a payment/transfer activity summary type of report, and a functional activity type of report.

72. The method of claim 22, further comprising providing at least one standard report from the database selected from a group consisting of a session summary report, a usage comparison report, a functions summary report, a customer activation /usage report, a session completion details report , an error reports, and a functions detail report.

73. A method for producing management information systems information from transaction journal log files written in elementized message format, comprising:
calling a method to find a next message in the transaction journal log files;
finding an end of a transaction journal log file and isolating message contents of the file into a message buffer space;
returning a status indicating the end of the file was reached;
calling another property of the method to acquire an address of the message buffer space;
providing the message buffer space address in the form of a VB VARIANT data type;
parsing the contents of the message corresponding to the message buffer address into elementized message format variables within at least one VB class;
performing at least one of writing a structured query language record of the parsed message contents into an output file and examining VB date variables in a predetermined VB class to determine if the parsed message contents should be written to an elementized message format output file; and
storing the output file in a relational database management system.

74. A system for producing advanced management information systems (MIS) information from source transaction data, comprising:
means for capturing source transaction data written sequentially in a pre-defined binary format from a database storing the data;
means for parsing the source transaction data to a plain text file format;
means for assigning a unique integer key value to each of a plurality of individual transaction records in each of a plurality of plain text output files; and
means for loading the output file to a relational database management system.

75. A system for producing advanced management information systems (MIS) information from source transaction data, comprising:
means for reading at least one transaction journal log written in a pre-defined binary format to isolate a transaction message in a message buffer;
means for parsing the contents of the isolated transaction message;
means for writing out the parsed contents into a flat-text file of Structured Query Language (SQL) records into an output file loadable into a database re-using at least one Visual Basic (VB) class used for creating the transaction journal log; and
means for storing the output file in the database.

76. A system for producing management information systems information from transaction journal log files written in elementized message format, comprising:
means for calling a method to find a next message in the transaction journal log files;
means for finding an end of a transaction journal log file and isolating message contents of the log file into a message buffer space;
means for returning a status indicating the end of the file was reached;
means for calling another property of the method to acquire an address of the message buffer space;
means for providing the message buffer space address in the form of a VB VARIANT data type;
means for parsing the contents of the message corresponding to the message buffer address into elementized message format variables within at least one VB class;
means for performing at least one of writing a structured query language record of the parsed message contents into an output file and examining VB date variables in a predetermined VB class to determine if the parsed message contents should be written to an elementized message format output file; and
means for storing the output file in a relational database management system.
